# EUROPÄISCHE PATENTSCHRIFT

(11) **EP 0 379 975 B1**
(45) Veröffentlichungstag und Bekanntmachung des Hinweises auf die Patenterteilung: **30.03.1994**
(21) Anmeldenummer: 90101002.5
(22) Anmeldetag: 18.01.1990
(51) Int. Cl.: B01D 53/26, B01D 53/04

(54) **Verfahren und Vorrichtung zur Adsorption von Feuchtigkeit aus Gasen, insbesondere Luft**
Process and apparatus for adsorbing humidity from gases, especially from air
Procédé et positif pour l'adsorption de l'humidité à partir de gaz, en particulier de l'air

(30) Priorität: 21.01.1989 DE 3901779
(43) Veröffentlichungstag der Anmeldung: 01.08.1990
(73) Patentinhaber: SOMOS GmbH, D-64331 Weiterstadt (DE)
(72) Erfinder: SOMOS GmbH, D-64331 Weiterstadt (DE)
(74) Vertreter: Zinngrebe, Horst, Dr.rer.nat.

(56) Entgegenhaltungen:
- DE-A- 2 354 745
- DE-A- 3 625 013
- US-A- 2 561 441

## Beschreibung

Die Erfindung betrifft ein Verfahren zur Adsorption von Feuchtigkeit aus Gasen, insbesondere Luft, mittels eines Adsorptionsmittels, welches abwechselnd von dem zu trocknenden Gas und von einem erhitzten Regenerationsmedium durchströmt wird, sowie eine Vorrichtung zur Durchführung des Verfahrens.

Aus der DE-A-36 25 013 ist es bekannt, zum Trocknen von Schüttgut, insbesondere Kunststoffgranulat, Trockenluft zu verwenden, die durch das einen Trocknungstrichter durchsinkende Schüttgut im Gegenstrom hindurchgeleitet wird. Der feuchten Abluft aus dem Trocknungstrichter wird die mitgeführte Feuchtigkeit durch ein Adsorptionsmittel wieder entzogen, welches nach seiner Sättigung mit Feuchtigkeit in einem Regenrationszyklus durch ein heißes Regenerationsmedium, meist Heißluft, regeneriert wird.

In einem hierfür geeigneten Ablufttrockner sind mehrere Trockentöpfe vorgesehen, deren Regenerationszyklen zeitlich so gegeneinander versetzt sind, daß stets mindestens ein Trockentopf zur Trocknung der Abluft zur Verfügung steht und für die übrigen Trockentöpfe genügend Zeit zur Regeneration und anschließenden Kühlung verbleibt. Die Adsorptions- und Regenerationsperioden der einzelnen Trockentöpfe werden daher fest eingestellt, wobei sich die Adsorptionszeit nach der maximal zulässigen Belastung des Adsorptionsmitels, häufig Molekularsieb, mit Feuchtigkeit richtet. Man möchte erreichen, daß während der Adsorptionszeit möglichst alle Feuchtigkeit aus dem zu trocknenden Gas adsorbiert werden kann und die dem Trocknungstrichter wieder zugeführte Trockenluft einen niedrigen Taupunkt besitzt.

Bei maximaler Beanspruchung des Trocknungstrichters mit zu trocknendem Schüttgut arbeitet ein derartiger Ablufttrockner mit einem hohen Wirkungsgrad. Wenn jedoch die Feuchtefracht der Abluft abnimmt, etwa weil der Granulatdurchsatz durch den Trocknungstrichter herabgesetzt wird oder das Schüttgut weniger Feuchte enthält, wird bei fest eingestellter Adsorptionszeit das Adsorptionsmittel im Trockentopf bereits regeneriert, obwohl seine maximale Feuchtigkeitsaufnahmekapazität noch nicht erreicht ist.

Um für solche Fälle die Energiebilanz zu verbessern hat man bereits vorgeschlagen, den Taupunkt der einen Trockentopf verlassenden und dem Trocknungstrichter zuzuführenden Trockenluft kontinuierlich mit dem Ziel zu erfassen, die Adsorptionsperiode des Trockentopfes soweit zu verlängern, bis der Taupunkt eine noch tolerierbare Grenze erreicht hat. Erst dann wird der Trockentopf auf Regeneration umgeschaltet.

Der Nachteil dieses Verfahrens besteht einerseits in dem hohen Kostenaufwand, der mit dem Einbau hinreichend genau arbeitender Taupunktfühler verbunden ist, und sodann in der starken Störanfälligkeit eines Taupunktfühlers. Derartige Meßfühler altern und verschmutzen schnell und liefern schon nach kurzer Betriebszeit derart ungenaue Werte, daß die Kapazität des Adsorptionsmittels nicht mehr voll ausgenutzt wird. Schließlich liegt ein weiterer Nachteil darin, daß bei Teillast die Abluft eine relativ hohe Temperatur von beispielsweise 60 bis 80 Grad erreichen kann, und das Molekularsieb bei diesen hohen Temperaturen nicht mehr wirkungsvoll Wasserdampf adsorbieren kann. Daher wird in diesem Fall bei geringer Feuchtfracht der Abluft ein schlechter Taupunkt signalisiert, ohne daß die Kapazität des Molekularsiebs bereits erschöpft wäre.

Aus der US-A-2561441 ist es bekannt, die Temperaturdifferenz der zu trocknenden Luft zwischen Eintritt und Austritt aus dem Adsorptionsmittel während der Adsorptionsphase zu messen. Diese Temperaturdifferenz ist ein Maß für die im Augenblick adsorbierte Feuchtigkeitsmenge. Man wartet dann mit dem Beginn der Regeneration so lange, bis diese Differenz ein gewisses Minimum erreicht hat, woraus man schließt, daß eine maximale Wassermenge adsorbiert wurde. Diese Methode funktioniert jedoch nur dann, wenn die Eintrittsfeuchte über die Zeit konstant bleibt. Schwankt diese jedoch, wie es bei vielen Trocknungsabläufen der Fall ist, so nimmt bei abnehmender Eintrittsfeuchte auch die Temperaturdifferenz ab. Hierdurch würde der Beginn der Regeneration eingeleitet, obwohl das Adsorptionsmittel noch nicht voll ausgenutzt ist.

Der Erfindung liegt daher die Aufgabe zugrunde, die eingangs erwähnten Verfahren so zu verbessern, daß die Feuchtigkeitsaufnahmekapazität des Adsorptionsmittels mit einfachen Meßmethoden auch bei schwankender Eintrittsfeuchte ermittelt werden kann, um eine optimale Länge der Adsorptionszeit zu erreichen. Dies erfolgt bevorzugt durch Messungen vom Temperaturen oder Gewichten während der Regenerationsphase, welches erfindungsgemäß eine Bestimmung der Wassermenge erlaubt, welche in der vorangegangenen Adsorptionsperiode aufgenommen wurde. Dieser Wert wird dann ausgenutzt, um die Länge der nun folgenden Adsorptionsphase auf einen optimalen Wert hin zu verändern.

Erfindungsgemäß ist dazu vorgesehen, daß die Länge der Adsorptionszeit eines Trockentopfes in Abhängigkeit von der während der vorangegangenen Adsorptionsphase adsorbierten Feuchtigkeitsmenge gesteuert wird. Der Vorteil der Erfindung liegt darin, daß auf zahlreiche einfache und dennoch ausreichend präzise Methoden zurückgegriffen werden kann, die die erforderliche Erfassung der adsorbierten Feuchtigkeitsmenge erlauben. So kann die adsorbierte Feuchtigkeitsmenge durch kontinuierliche Wägung eine Trockentopfes erfaßt werden, wofür zum Beispiel Druckmeßdosen im Gestell des Trockentopfes geeignet sind. Statt die Gewichtszunahme während des Adsorptionszyklus kann man alternativ auch die Gewichtsabnahme während des Regenerationszyklus auf die genannte Art kontinuierlich erfassen und zur Steuerung des Umschaltzeitpunktes von Adsorption auf Regeneration heranziehen. Diese Möglichkeit der Erfindung empfiehlt sich vor allem dann, wenn mehrere Trockentöpfe auf einem Karussel angeordnet sind, von denen jeweils nur ein Trockentopf in eine Regenerationsstufe des Karussels eingefahren wird. Es genügt dann, daß nur in der Regenerationsstufe die Gewichtsabnahme eines zu regenerierenden Trockentopfes erfassende Druckmeßdosen angeordnet sind. Ist die Gewichtsabnahme während der Regeneration geringer als ein maximal anzustrebender Wert, wird die anschließende Adsorptionsperiode verlängert, ist sie größer, wird sie verkürzt.

Eine weitere Verbesserung der Erfindung wird dadurch erreicht, daß die adsorbierte Feuchtigkeitsmenge durch Erfassen der Temperatur des Adsorptionsmittels bestimmt wird.

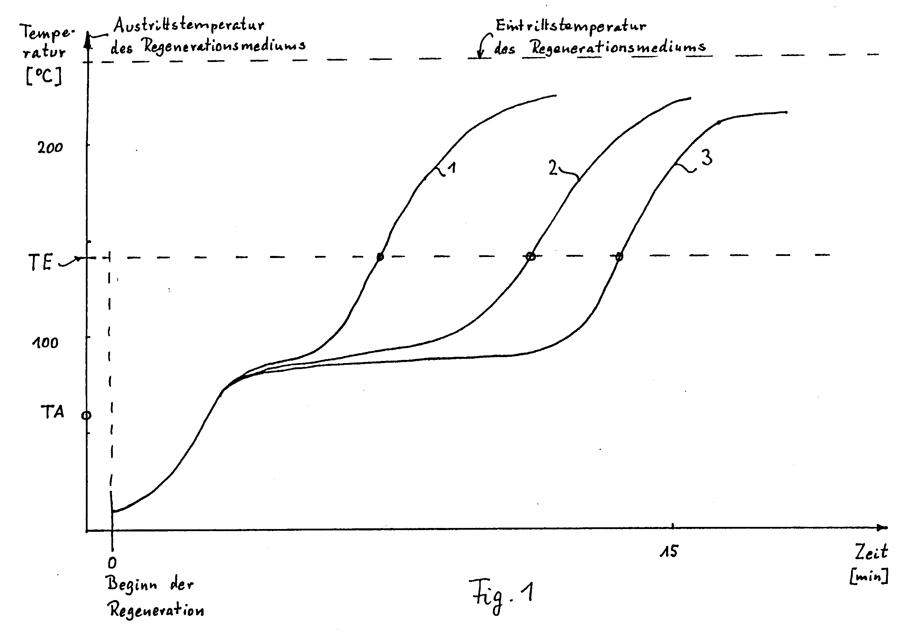

Mißt man den Verlauf der Temperatur der Regenerationsmittel während der Regenerationsperiode in Abhängigkeit von der Zeit, so ergeben sich für unterschiedliche Wasserbelastungen des Adsorptionsmittels Kurven gemäß beigefügter Abbildung 1. Als Beispiel zeigt Kurve 2 den Temperaturverlauf des Adsorptionsmittels während der Regeneration bei einer mittleren Wasserbelastung des Adsorptionsmittels. Zu Beginn der Regenerationszeit steigt die Temperatur relativ schnell an und geht dann in einen langsamen Anstieg in einen Temperaturbereich über, bei welchem das Wasser aus dem Adsorptionsmittel im wesentlichen verdampft. Dieser Temperaturbereich hängt von der Art der Adsorptionsmittel ab. Bei Molekularsieben liegt der Temperaturbereich bei ca. 80 bis 100°C. Ist das Wasser weitgehend aus dem Adsorptionsmittel entfernt, steigt die Temperatur wieder schneller an, um sich schließlich im oberen Bereich der Eingangstemperatur des Regenerationsmediums, also der Heißluft, zu nähern.

Wird nun ein gleich großer Trockentopf regeneriert, dessen Adsorptionsmittel eine höhere Wasserlast enthält, so ergibt sich eine Verlängerung der Zeitspanne, in der das Wasser von dem Regenerationsmedium verdampft wird. Der zugehörige Kurvenverlauf ist als Kurve 3 wiedergegeben. Enthält das Adsorptionsmittel in dem Trockentopf zu Beginn der Regenerationsphase jedoch weniger Wasserlast, so ergibt sich etwa eine Kurve 1.

Wird mit einem Thermofühler die Temperatur des Adsorptionsmittels fortwährend überwacht, so stellt die Zeitspanne, die vom Beginn der Regeneration bis zum Erreichen einer vorgegebenen Temperatur TE benötigt wird, ein Maß für die Wasserlast des Adsorptionsmittels dar. Man kann empirisch die Abhängigkkeit dieser Zeitspanne von der Wasserlast ermitteln. Somit ergibt die Zeitspanne, die vom Beginn der Regeneration bis zum Erreichen der Temperatur TE des Adsorptionsmittels verstreicht, ein Maß für die im Adsorptionsmittel adsorbierte Feuchte. Die erfaßte Zeitspanne kann dann zur Steuerung der Länge der anschließenden Adsorptionsphase benutzt werden. Die Temperatur TE wird zweckmäßig jeweils in Abhängigkeit des eingesetzten Adsorptionsmittels festgelegt, und sollte etwas höher liegen als der Temperaturbereich, in welchem die Wasserlast aus dem Adsorptionsmittel hauptsächlich durch Verdampfen ausgetrieben wird, bei Molekularsieben sollte TE also etwa zwischen 120°C und 140°C liegen.

Bei Trocknungsvorgängen, bei denen unterschiedliche Ablufttemperaturen auftreten können, beginnt die Regeneration mit unterschiedlichen Anfangstemperaturen des Molekularsiebes. In diesen Fällen ist es vorteilhaft, die Zeitspanne zu erfassen, die zum Durchschreiten eines gewissen Temperaturbereichs nötig ist, nämlich von TA bis TE. TA liegt hierbei unterhalb der Zone, in welcher das Wasser bevorzugt ausgetrieben wird, bei Molekularsieb als Adsorptionsmittel z.B. bei etwa 60° bis 80° C.

Wie erwähnt verringert sich bei den Adsorptionsmitteln die Wasseraufnahmekapazität mit steigender Temperatur. Bei gleich hohem Wassergehalt des Molekularsiebs oder Silikagels hat die Trockenluft dann einen ungünstigeren, höheren Taupunkt. Bei etlichen Anwendungsfällen ist diese Verschlechterung des Taupunktes mit steigender Ablufttemperatur akzeptabel, da eine hohe Ablufttemperatur eine Folge eines niedrigeren Durchsatzes von zu trocknendem Material darstellt. Der ungünstigere Taupunkt ermöglicht dann immer noch eine ausreichende Trocknung.

In den Fällen jedoch, in denen die Taupunktverschlechterung der Trockenluft nicht in Kauf genommen werden kann, wird erfindungsgemäß die Länge der Adsorptionszeit in Abhängigkeit von der ansteigenden Ablufttemperatur verringert, so daß die Regeneration bei einer herabgesetzten adsorbierten Wassermenge beginnt. Die für einen gewünschten Taupunkt zulässige Wassermenge läßt sich leicht vesuchsweise bestimmen, indem man den Taupunkt der Trockenluft in Abhängigkeit von Wasserlast des Molekularsiebs und von der Temperatur der Abluft mißt. Umgekehrt kann man eine höhere Wasserlast zulassen, wenn die Ablufttemperatur besonders niedrig ist.

Ähnliches gilt bei Trocknern, bei denen wie oben beschrieben, die Länge der Adsorptionszeit in Abhängigkeit von dem Taupunkt der Trockenluft gesteuert wird. In den Fällen, wo man bei steigender Ablufttemperatur einen ungünstigeren Taupunkt zulassen kann, wird erfindungsgemäß der zulässige Taupunkt, bei dem die Adsorptionszeit beendet wird, in Abhängigkeit von der Temperatur der Abluft geregelt, das heißt bei steigender Ablufttemperatur erhöht und bei fallender Ablufttemperatur gesenkt.

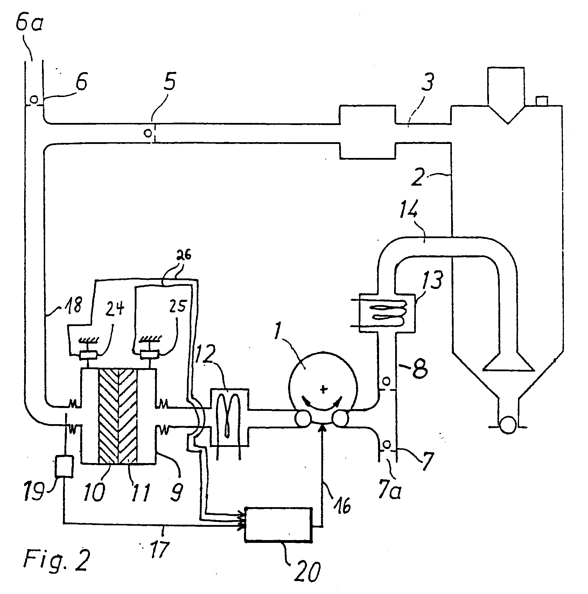

Apparativ gibt es verschiedene Möglichkeiten, den Temperaturfühler anzuordnen. So zeigt Fig. 2 eine Vorrichtung zum Trocknen von Gas, die in ihren Grundzügen aus der Deutschen-C-23 54 745 bekannt ist. Danach wird einem Trocknungstrichter 2 über eine Zuluftleitung 14 Trockenluft zugeführt, die das den Trocknungstrichter 2 durchsinkende, nicht dargestellte Schüttgut im Gegenstrom durchdringt und am oberen Ende des Trocknungstrichters 2 als feuchte Luft über Abluftleitung 3 abgezogen wird. Die Abluftleitung 3 mündet in einen Trockentopf 9 über ein Rückschlagventil 5, in welchem Adsorptionsmittel 10, 11, beispielsweise Silicagel und Molekularsieb enthalten sind. Das Adsorptionsmittel 10, 11 entzieht der feuchten Abluft die mitgeführte Feuchtigkeit, so daß die den Trockentopf 9 verlassende Trockenluft nach Aufwärmung in einer oder beiden Heizungen 12, 13 von einem Gebläse 1 über ein weiteres Rückschlagventil 8 durch die Trockenluftleitung 14 wieder dem Trocknungsrichter 2 zugeführt wird. Wenn das Adsorptionsmittel 10, 11 hinreichend mit Feuchtigkeit gesättigt ist, wird die Drehrichtung des Gebläses 1 durch eine Steuerung 20 umgedreht, so daß das Außenluft über einen Stutzen 7a und ein Rückschlagventil 7 angesaugt, in der Heizung 12 erhitzt und durch den Trockentopf 9 hindurch gedrückt wird. Durch einen Stutzen 6a gelangt die feuchte Regenerationsluft über ein Rückschlagventil 6 ins Freie, nachdem die heiße Regenerationsluft aus dem Adsorptionsmittel 10, 11 das adsorbierte Wasser aufgenommen hat. Die Umschaltzeitpunkte vom Trocknen der feuchten Abluft aus dem Trocknungstrichter 2 zur Regeneration des Adsorptionsmittels 10, 11 werden durch die Steuerung 20 bestimmt. Dazu ist ein Temperaturfühler 19 vorgesehen, dessen Sonde in die Auslaßleitung 18 für feuchte Regenerationsluft aus dem Trockentopf 9 ragt. Das Ausgangssignal des Temperaturfühlers 19 wird über eine Steuersignalleitung 17 der Steuerung 20 zugeführt. Diese stellt fest, wann die Temperatur TE in der Auslaßleitung 18 erreicht ist und bestimmt danach über Steuerleitung 16 eine Umschaltung der Drehrichtung des Gebläses 1 und damit eine Umschaltung auf Feuchte-Adsorption aus der feuchten Abluft aus dem Trocknungstrichter 2.

Als Alternative könnte die Sonde des Temperaturfühlers 19 auch in dem Teil des Adsorptionsmittels 10 eingebettet sein, der dem Auslaßkanal 18 am nächsten liegt. Als weitere Alternative könnten statt des Temperaturfühlers Druckmeßdosen 24, 25 vorgesehen sein, an denen der Trockentopf 9 aufgehängt ist und die die Gewichtsabnahme des Trockentopfes 9 während der Regeneration erfassen. Die Ausgangssignale der Druckmeßdosen gelangen dann über Steuersignalleitungen 26 zur Steuerung 20.

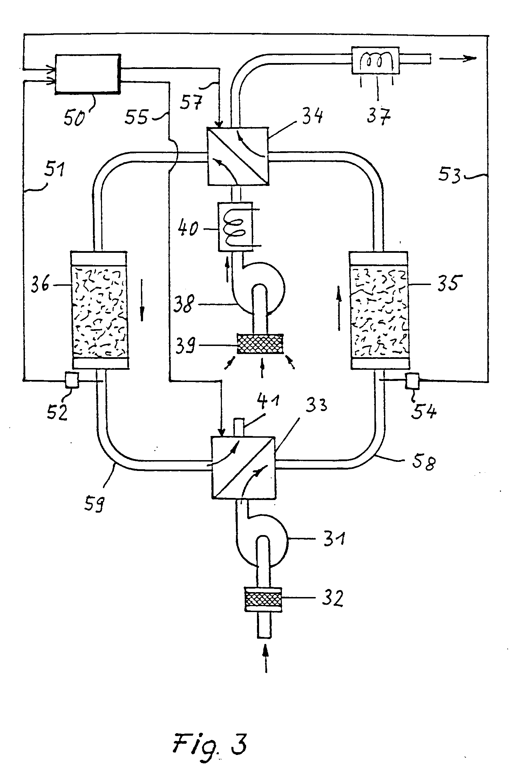

Fig. 3 zeigt eine Ausführungsform einer Vorrichtung zum Trocknen von feuchtem Gas, die in ihren Grundzügen aus der US-A-4, 038,054 bekannt ist. Darnach saugt ein Gebläse 31 über ein Filter 32 mit Feuchtefracht beladene Luft an und drückt sie über ein Wechselventil 33 in einen ersten mit Molekularsieb als Adsorptionsmittel gefüllten Trockentopf 35, in welchem die das Adsorptionsmittel durchstreichende Luft von der mitgeführten Feuchtigkeit befreit wird. Die getrocknete Luft strömt vom Trockentopf 35 über ein weiteres Wechselventil 34 und eine Heizung 37 zurück zum Verbraucher, beispielsweise einen Trocknungstrichter.

Gleichzeitig saugt ein Gebläse 38 über einen Filter 39 Regenerationsluft aus der Umgebung an und drückt sie über eine Heizung 40, in der sie erhitzt wird, sowie über das Wechselventil 34 durch einen zweiten mit Molekularsieb als Adsorptionsmittel gefüllten Trockentopf 36. Die erhitzte Regenerationsluft nimmt die im Adsorptionsmittel adsorbierte Feuchtigkeit auf, so daß die feuchte Regenerationsluft über das Wechselventil 33 und einen Rohrstutzen 41 in die Umgebung entlassen werden kann. Die Wechselventile 33 und 34 werden über Steuersignalleitungen 55 und 57 aus einer Steuerung 50 mit Umstellsignalen beaufschlagt, die eine Umstellung der Trockentöpfe 35 und 36 von Trocknen auf Regenerieren und umgekehrt bewirken. Die Steuerung 50 wird zur Abgabe der Umstellungssignale durch Steuersignale auf einer der Steuersignalleitungen 51 oder 53 veranlaßt, welche von Temperaturfühlern 52, 54 abgegeben werden. Der Sensor des Temperaturfühlers 52 sitzt im Regenerationsluft-Auslaßkanal 59 zwischen Trockentopf 36 und Auslaßstutzen 41 bei der in Fig. 3 dargestellten Stellung der Wechselventile 33, 34. Der Sensor des Temperaturfühlers 54 sitzt in Regenerationsluft-Auslaßkanal 58, der nach Umstellung der Ventile 33 und 34 vom Trockentopf 35 zum Auslaßstutzen 41 führt. Die Steuerung 50 bildet je ein Umsteuersignal auf den Leitungen 55 und 57 aufgrund eines auf der Leitung 51 stehenden, etwa die Temperatur TE repräsentierenden Steuersignals aus dem Temperaturfühler 52 nur dann, wenn die Wechselventile 33, 34, wie in Fig. 3 dargestellt, geschaltet sind. Die Steuerung 50 bildet ein Umsteuersignal auf den Leitungen 55 und 57 aufgrund eines beispielsweise die Temperatur TE repäsentierenden Steuersignals auf Leitung 53 nur dann, wenn die Wechselventile 33 und 34 gegenüber der in Fig. 3 dargestellten Stellung umgestellt sind, so daß der Trockentopf 35 in der Regenerationsphase und der Trockentopf 36 in der Adsorptionsphase stehen. Selbstverständlich könnten die Sensoren der Temperaturfühler 52 und 54 auch innerhalb des Molekularsiebs in den Trockentöpfen 34, 36 in der Nähe der Auslaßkanäle 58, 59 angeordnet sein. Auch in diesem Ausführungsbeispiel können statt der Temperaturfühler 52, 54 Druckmeßdosen vorgesehen sein, auf denen die Trockentöpfe 35, 36 gelagert sind und die Gewichtsabnahme des jeweils in der Regeneration oder Adsorption befindlichen Trockentopfes 35 oder 36 erfassen.

Wie erläutert kann man den Temperaturfühler in einer Schicht des Adsorptionsmittels selbst anbringen, die während des Regenerationszyklus von der Heißluft möglichst spät erreicht wird. Der Temperaturfühler kann also im wesentlichen gegenüber dem Heißlufteinlaß im Adsorptionsmittel angeordnet werden. Alternativ kommt in Betracht, die Temperatur der auf der Abstromseite befindlichen Begrenzungsfläche für den Behälter des Adsorptionsmittels aufzunehmen, womit die Adsorptionsmitteltemperatur indirekt erfaßt wird. In übrigen ergibt sich eine besonders einfache Anordnung des Temperaturfühlers im Austrittskanal des Regenerationsmediums aus dem Trockentopf, der dann die Temperatur des den Trockentopf verlassenden Regenerationsmediums feststellt.

Beispiel: Ein Trockentopf enthält als Adsorptionsmittel 10 kg Molekularsieb. Getrocknet werden soll die Abluft aus einem Trockungstrichter, den zu trocknendes Kunststoffgranulat durchsinkt. Unter maximaler Last ergibt sich eine optimale Adsorptionszeitspanne von einer Stunde, während der 1 kg Wasser adsorbiert wird. Das Molekularsieb, das maximal 20 % seines Gewichts adsorbieren kann, ermöglicht unter diesen Bedingungen, nämlich einer Adsorption von 10 % seines Eigengewichts, noch ein Taupunkt von - 30°C der Trockenluft, die dem Trocknungstrichter wieder zugeführt werden kann.

### Steuerungsmöglichkeiten

Es wird die Gewichtszunahme des Trockentopfes während der Adsorptionsphase bei einere Ablufttemperatur von 50° C gemessen. Es wird zu einem Zeitpunkt von Adsorption auf Regeneration des Trockentopfes umgeschaltet, an welchem die aufgenommene Wassermenge 1 kg erreicht.

Es wird die vom Adsorptionsmittel aufgenommene Wassermenge durch Wägung während der Regenerationsphase festgestellt. Ergibt sich dabei, daß während des Regenerationszyklus etwa 500 g Wasser abgegeben worden sind, demzufolge also in der vorangegangenen Adsorptionphase nur 500 g Wasser vom Adsorptionsmittel aufgenommen worden sind, verdoppelt die Steuerung die nachfolgende Adsorptionszeit für den Trockentopf.

Wenn festgestellt wird, daß während des Regenerationszyklus weniger Wasser abgegeben worden ist als 1 kg, so wird die nachfolgende Adsorptionsperiode um eine feste Zeitspanne z.B. 10 Minuten verlängert. Diese schrittweise Verlängerung der Zeitdauer der nachfolgenden Adsorptionsphasen wird solange durchgeführt, bis festgestellt werden kann, daß während der Regenerationsphase 1 kg Wasser abgegeben worden ist. Wird diese Wassermenge überschritten, wird die anschließende Adsorptionsphase um 10 Minuten verkürzt. Auf diese Weise pendelt sich der Wechsel von Adsorption und Regeneration auf eine optimale Adsorptionlänge ein, bei der die Aufnahmekapazität des Adsorptionsmittels praktisch voll ausgenutzt wird.

Empirisch wurde ermittelt, daß bei einem Wassergehalt des Adsorptionsmittels von 1 kg während der Regeneration eine Zeitspanne von 8 Minuten benötigt werden, um den Temperaturbereich TA= 60° C und TE= 120° C zu durchschreiten. Mißt man nun in der Praxis eine kürzere Zeitspanne für das Durchschreiten des gleichen Temperaturbereichs, so wird die nachfolgende Adsorptionsphase verlängert.

### Variante

Bei Anstieg der Ablufttemperatur auf 60° C wird von Adsorption auf Regeneration umgeschaltet, wenn die aufgenommene Wassermenge 0,9 kg erreicht, und bei einem Anstieg auf 70° C, wenn 0,75 kg erreicht wird.

## Patentansprüche

1. Verfahren zur Adsorption von Feuchtigkeit aus Gasen, insbesondere Luft, mittels eines Adsorptionsmittels, welches während einer Adsorptionsphase von dem zu trocknenden Gas und während einer anschließenden Regenerationsphase von einem erhitzten Regenerationsmedium durchströmt wird, dadurch gekennzeichnet, daß ein die während der Adsorptionsphase von dem Adsorptionsmittel aufgenommene Feuchtigkeit repräsentierender Parameter bestimmt und die Dauer der nachfolgenden Adsorptionsphase in Abhängigkeit von der ermittelten Größe des Parameter gesteuert wird.

2. Verfahren nach Anspruch 1, dadurch gekennzeichnet, daß die Gewichtszunahme des Adsorptionsmittels während der Adsorptionsphase während einer vorgegebenen Zeitspanne ermittelt und mit einer vorgegebenen Gewichtszunahme verglichen wird, wobei das Ergebnis des Vergleichs als Parameter benutzt wird.

3. Verfahren nach Anspruch 1, dadurch gekennzeichnet, daß die Gewichtsabnahme des Adsorptionsmittels während der Regenerationsphase ermittelt und mit einer vorgegebenen Gewichtsabnahme verglichen wird, wobei das Ergebnis des Vergleichs als Parameter benutzt wird.

4. Verfahren nach Anspruch 1, dadurch gekennzeichnet, daß die Zeitspanne, bis zu der die Temperatur des Adsorptionsmittels während der Regenerationsphase eine vorgegebene Temperatur erreicht, ermittelt und mit einer vorgegebenen Zeitspanne verglichen wird, wobei das Ergebnis des Vergleichs als Parameter benutzt wird.

5. Verfahren nach Anspruch 1, dadurch gekennzeichnet, daß die Zeitspanne, bis zu der die Temperatur des das Adsorptionsmittel während der Regenerationsphase verlassenden Regenerationsmittels eine vorgegebene Temperatur erreicht, ermittelt und mit einer vorgegebenen Zeitspanne verglichen wird, wobei das Ergebnis des Vergleichs als Parameter benutzt wird.

6. Verfahren nach Anspruch 4 oder 5, dadurch gekennzeichnet, daß die Dauer der an einer Regenerationsphase anschließenden Adsorptionsphase durch diejenige Zeitspanne gesteuert wird, die die Temperatur des Adsorptionsmittels während der Regenerationsphase bis zum Anstieg auf eine vorgegeben Temperatur (TE) benötigt.

7. Verfahren nach Anspruch 6, dadurch gekennzeichnet, daß die Zeitspanne herangezogen wird, die zum Durchschreiten eines gewissen Temperaturbereichs (TA-TE) nötig ist.

8. Verfahren nach einem der vorstehenden Ansprüche, dadurch gekennzeichnet, daß die Länge der Adsorptionsphase schrittweise verlängert oder verkleinert wird.

9. Verfahren zur Adsorption von Feuchtigkeit aus Gasen, insbesondere Luft, nach einem der vorstehenden Ansprüche mittels eines Adsorptionsmittels, welches abwechselnd von dem zu trockenden Gas und von einem erhitzten Regenerationsmedium durchströmt wird, dadurch gekennzeichnet, daß die Länge der Adsorptionszeit in Abhängigkeit von der Temperatur des zu trocknenden Gases, vorzugsweise der Abluft aus einem Kunststoff-Trocknungstrichter (2), geregelt wird.

10. Verfahren zur Adsorption von Feuchtigkeit aus Gasen, insbesondere Luft, nach einem der vorstehenden Ansprüche mittels eines Adsorptionsmittels, welches abwechselnd von dem zu trockenden Gas und von einem erhitzten Regenerationsmedium durchströmt wird, dadurch gekennzeichnet, daß der Taupunkt des getrockneten Gases in Abhängigkeit von der Temperatur des zu trocknenden Gases gesteuert wird.

11. Vorrichtung zur Durchführung des Verfahrens nach einem der Ansprüche 1 - 3 oder 8 mit einem Ablufttrockner, der mindestens einen Adsorptionsmittel enthaltenden Trockentopf enthält, welcher an eine Abluftleitung für feuchtebeladene Luft, eine Trockenluftleitung, eine Zuleitung für heißes Regenerationsmedium und eine Auslaßleitung für Regenerationsmedium anschließbar ist, dadurch gekennzeichnet, daß der Trockentopf (9; 35, 36) auf Druckmeßdosen ruht oder an Druckmeßdosen (24, 25) aufgehängt ist deren Ausgangssignale einer die Länge der nachfolgenden Adsorptionsphase bestimmenden Steuerung (20; 50) zugeführt werden.

12. Vorrichtung zur Durchführung des Verfahrens nach einem der Ansprüche 4 - 8, mit einem Ablufttrockner, der mindestens einen Adsorptionsmittel enthaltenden Trockentopf enthält, welcher gegebenenfalls mittels Stellventilen an eine Abluftleitung für feuchtebeladene Luft, eine Trockenluftleitung, eine Zuleitung für heißes Regenerationsmedium und eine Auslaßleitung für Regenerationsmedium anschließbar ist, dadurch gekennzeichnet, daß in der Auslaßleitung (18; 58, 59) des Regenerationsmediums ein Temperaturfühler (19; 52, 54) angeordnet ist, dessen Ausgangssignal einer die Länge der nachfolgenden Adsorptionsphase bestimmenden Steuerung (20; 50) zugeführt ist.

13. Vorrichtung zur Durchführung des Verfahrens nach einem der Ansprüche 4 - 8, mit einem Ablufttrockner, der mindestens einen Adsorptionsmittel enthaltenden Trockentopf enthält, welcher gegebenenfalls mittels Stellventilen an eine Abluftleitung für feuchtebeladene Luft, eine Trockenluftleitung, eine Zuleitung für heißes Regenerationsmedium und eine Auslaßleitung für Regenerationsmedium anschließbar ist, dadurch gekennzeichnet, daß in dem Adsorptionsmittel (10, 11; 35, 36) ein Temperaturfühler (19; 52, 54) angeordnet ist, dessen Ausgangssignal einer die Länge der nachfolgenden Adsorptionsphase bestimmenden Steuerung (20; 50) zugeführt ist.

## Claims

1. A process for the adsorption of moisture from gases, in particular air, by means of an adsorption means through which the gas to be dried flows during an adsorption phase and through which a heated regeneration medium flows during a subsequent regeneration phase, characterised in that a parameter representing the moisture taken up during the adsorption phase by the adsorption means is determined and the duration of the subsequent adsorption phase is controlled dependent on the ascertained magnitude of the parameter.

2. A process in accordance with Claim 1, characterised in that the weight increase of the adsorption means during the adsorption phase during a predetermined period of time is ascertained and is compared with a predetermined weight increase, the result of the comparison being used as a parameter.

3. A process in accordance with Claim 1, characterised in that the weight decrease of the adsorption means during the regeneration phase is ascertained and is compared with a predetermined weight decrease, the result of the comparison being used as a parameter.

4. A process in accordance with Claim 1, characterised in that the period of time until the temperature of the adsorption means during the regeneration phase reaches a predetermined temperature is ascertained and is compared with a predetermined period of time, the result of the comparison being used as a parameter.

5. A process in accordance with Claim 1, characterised in that the period of time until the temperature of the regeneration means leaving the adsorption means during the regeneration phase reaches a predetermined temperature is ascertained and is compared with a predetermined period of time, the result of the comparison being used as a parameter.

6. A process in accordance with Claim 4 or 5, characterised in that the duration of the adsorption phase following a regeneration phase is controlled by that period of time which the temperature of the adsorption means during the regeneration phase requires to rise to a predetermined temperature (TE).

7. A process in accordance with Claim 6, characterised in that the period of time necessary to cover a certain temperature range (TA-TE) is taken into consideration.

8. A process in accordance with any one of the preceding Claims, characterised in that the length of the adsorption phase is increased or decreased in stages.

9. A process for the adsorption of moisture from gases, in particular air, in accordance with any one of the preceding Claims by means of an adsorption means through which the gas to be dried and a heated regeneration medium flow alternately, characterised in that the length of the adsorption period is regulated dependent on the temperature of the gas to be dried, preferably the outflow-air from a plastics drying tunnel (2).

10. A process for the adsorption of moisture from gases, in particular air, in accordance with any one of the preceding Claims by means of an adsorption means through which the gas to be dried and a heated regeneration medium flow alternately, characterised in that the dew point of the dried gas is controlled dependent on the temperature of the gas to be dried.

11. A device for implementing the process in accordance with any one of Claims 1-3 or 8, having an outflow-air dryer which comprises at least one drying pot which contains adsorption means and is connectable to an outflow-air line for moisture-laden air, a drying-air line, a feed line for hot regeneration medium and an outlet line for regeneration medium, characterised in that the drying pot (9; 35, 36) rests on pressure cells or is suspended on pressure cells (24, 25) whose output signals are fed to a control device (20; 50) determining the length of the subsequent adsorption phase.

12. A device for implementing the process in accordance with any one of Claim 4-8, having an outflow-air dryer which comprises at least one drying pot which contains adsorption means and is connectable - possibly by means of control valves - to an outflow-air line for moisture-laden air, a drying-air line, a feed line for hot regeneration medium and an outlet line for regeneration medium, characterised in that a temperature sensor (19; 52, 54) is arranged in the outlet line (18; 58, 59) of the regeneration medium and its output signal is fed to a control device (20; 50) determining the length of the subsequent adsorption phase.

13. A device for implementing the process in accordance with any one of Claims 4-8, having an outflow-air dryer which comprises at least one drying pot which contains adsorption means and is connectable - possibly by means of control valves - to an outflow-air line for moisture-laden air, a drying-air line, a feed line for hot regeneration medium and an outlet line for regeneration medium, characterised in that a temperature sensor (19; 52, 54) is arranged in the adsorption means (10, 11; 35, 36) and its output signal is fed to a control device (20; 50) determining the length of the subsequent adsorption phase.

## Revendications

1. Procédé pour l'adsorption d'humidité de gaz, en particulier d'air, au moyen d'un adsorbant, lequel est traversé pendant une phase d'adsorption par le gaz à sécher et pendant une phase de régénération suivante par un agent de régénération chauffé, caractérisé en ce qu'un paramètre représentant l'humidité recueillie par l'adsorbant pendant la phase d'adsorption est déterminé et la durée de la phase d'adsorption suivante est commandée en fonction de la grandeur calculée du paramètre.

2. Procédé selon la revendication 1, caractérisé en ce que l'augmentation de poids de l'adsorbant pendant la phase d'adsorption est établie pendant un laps de temps prédéterminé et est comparée avec une augmentation de poids prédéterminée, le résultat de la comparaison étant utilisé comme paramètre.

3. Procédé selon la revendication 1, caractérisé en ce que la diminution de poids de l'adsorbant pendant la phase de régénération est établie et est comparée avec une diminution de poids prédéterminée, le résultat de la comparaison étant utilisé comme paramètre.

4. Procédé selon la revendication 1, caractérisé en ce que le laps de temps jusqu'auquel la température de l'adsorbant atteint une température prédéterminée pendant la phase de régénération est établi et comparé avec un laps de temps prédéterminé, le résultat de la comparaison étant utilisé comme paramètre.

5. Procédé selon la revendication 1, caractérisé en ce que le laps de temps jusqu'auquel la température de l'agent de régénération quittant l'adsorbant pendant la phase de régénération atteint une température prédéterminée est établi et comparé avec un laps de temps prédéterminé, le résultat de la comparaison étant utilisé comme paramètre.

6. Procédé selon la revendication 4 ou 5, caractérisé en ce que la durée de la phase d'adsorption suivant une phase de régénération est commandée par le laps de temps que nécessite la température de l'adsorbant pendant la phase de régénération jusqu'à l'augmentation à une température prédéterminée (TE).

7. Procédé selon la revendication 6, caractérisé en ce que l'on se sert du laps de temps qui est nécessaire pour parcourir une plage de température donnée (TA-TE).

8. Procédé selon l'une des revendications précédentes, caractérisé en ce que la longueur de la phase d'adsorption est prolongée ou diminuée pas à pas.

9. Procédé pour l'adsorption d'humidité de gaz, en particulier d'air, selon l'une des revendications précédentes, au moyen d'un adsorbant qui est traversé alternativement par le gaz à sécher et par un agent de régénération chauffé, caractérisé en ce que la longueur du temps d'adsorption est réglée en fonction de la température du gaz à sécher, de préférence de l'air d'échappement d'une trémie de séchage en matière plastique (2).

10. Procédé pour l'adsorption d'humidité de gaz, en particulier d'air, selon l'une des revendications précédentes, au moyen d'un adsorbant qui est traversé alternativement par le gaz à sécher et par un agent de régénération chauffé, caractérisé en ce que le point de rosée du gaz séché est commandé en fonction de la température du gaz à sécher.

11. Dispositif pour la réalisation du procédé selon l'une des revendications 1 - 3 ou 8 avec un sécheur d'air d'échappement qui contient au moins un pot sécheur contenant un adsorbant, lequel peut être raccordé à une tuyauterie d'air d'échappement pour air chargé d'humidité, une tuyauterie d'air sec, une tuyauterie d'amenée pour agent de régénération chaud et une tuyauterie d'évacuation pour agent de régénération, caractérisé en ce que le pot sécheur (9 ; 35, 36) repose sur des capsules manométriques ou est suspendu à des capsules manométriques (24, 25) dont les signaux de sortie sont conduits à une commande (20 ; 50) déterminant la longueur de la phase d'adsorption suivante.

12. Dispositif pour la réalisation du procédé selon l'une des revendications 4 - 8, avec un sécheur d'air d'échappement, qui contient au moins un pot sécheur contenant un adsorbant, lequel peut être raccordé le cas échéant au moyen de clapets de réglage à une tuyauterie d'air d'échappement pour air chargé d'humidité, une tuyauterie d'air sec, une tuyauterie d'amenée pour agent de régénération chaud et une tuyauterie d'évacuation pour agent de régénération, caractérisé en ce que dans la tuyauterie d'évacuation (18 ; 58, 59) de l'agent de régénération est disposée une sonde de température (19 ; 52, 54) dont le signal de sortie est conduit à une commande (20 ; 50) déterminant la longueur de la phase d'adsorption suivante.

13. Dispositif pour la réalisation du procédé selon l'une des revendications 4 - 8, avec un sécheur d'air d'échappement, qui contient au moins un pot sécheur contenant un adsorbant, lequel peut être raccordé le cas échéant au moyen de clapets de réglage à une tuyauterie d'air d'échappement pour air chargé d'humidité, une tuyauterie d'air sec, une tuyauterie d'amenée pour fluide de régénération chaud et une tuyauterie d'évacuation pour fluide de régénération, caractérisé en ce que dans l'adsorbant (10, 11 ; 35, 36) est disposée une sonde de température (19 ; 52, 54) dont le signal de sortie est conduit à une commande (20 ; 50) déterminant la longueur de la phase d'adsorption suivante.
